# EUROPEAN PATENT SPECIFICATION

(11) **EP 4 059 738 B1**
(45) Date of publication and mention of the grant of the patent: **01.01.2025**
(21) Application number: 20887485.9
(22) Date of filing: 16.11.2020
(51) Int. Cl.: B60C 5/14, B60C 17/00

(54) **RUN-FLAT TIRE**
NOTLAUFREIFEN
PNEU À ROULAGE À PLAT

(30) Priority: 15.11.2019 JP 2019207476
(43) Date of publication of application: 21.09.2022
(73) Proprietor: BRIDGESTONE CORPORATION, Chuo-ku Tokyo 104-8340 (JP)
(72) Inventor: FUKUZAWA, Kazuyuki, Tokyo 104-8340 (JP)
(74) Representative: Marks & Clerk LLP
(86) International application number: PCT/JP2020/042607
(87) International publication number: WO 2021/095884

(56) References cited:
- EP-A1- 2 808 177
- EP-A1- 3 059 102
- WO-A1-2016/184580
- WO-A1-96/30221
- JP-A- 2010 111 173
- JP-A- 2011 042 239
- JP-A- 2014 509 274
- JP-A- 2015 039 926
- JP-A- 2018 130 977
- JP-A- 2019 107 999
- JP-A- H0 948 209
- US-A1- 2012 160 388

## Description

### Technical Field

The present invention relates to a run-flat tire.

### Background Art

Japanese Patent Application Laid-Open (JP-A) No. 2012-116212 discloses a sidewall-reinforced-type run-flat tire as an example of a run-flat tire that can travel a fixed distance even in a state in which the internal pressure of the tire has decreased. Specifically, side reinforcing rubbers are provided at the tire side portions of the run-flat tire.
JPH0948209A discloses a film of polymer composition containing thermoplastic resin or blend of thermoplastic resin and elastomer of which air permeation coefficient is less than 25 × 10^-12 cc.cm/m^2.sec.mHg and Young's modulus is 1~500MPa, is arranged so as to substantially cover the whole tire inner circumferential face of a tire belt part. Because a plurality of layers of polymer film as an air permeation preventing layer exist in the territories including the belt end parts of the belt width and being over 25% of the belt width in the widest belt part of a tire belt section, oxygen deterioration of the belt end parts can be prevented. Further, because the gauge becomes very thin, air stagnation due to step difference is not generated, vulcanization trouble is not caused, and the weight can be reduced. WO9630221A1 discloses a pneumatic tire in which an air-permeation prevention layer comprising a film of a polymer composition including a thermoplastic resin or a blend of a thermoplastic resin and an elastomer whose air permeability coefficient is 25x10^-12cc.cm/cm^2.sec.cmHg or smaller and whose Young's modulus of elasticity ranges 1 to 1,000 MPa is disposed so as to substantially cover portions of an inner surface of the tire extending from ends of a belt at least 20mm towards the crown center and at most portions of an inner surface of the tire extending from positions 20mm away from the belt ends towards a bead toward the crown center, while an air-permeation prevention layer formed of rubber is disposed so as to substantially cover the remaining inner surface of the tire and in which an air-permeation prevention layer having actual breaking elongations of 15% or larger in circumferential and radial directions of the tire is used on the side portion of the tire ranging from at least 0.5 to 0.65 times the cross-sectional height of the tire.
JP2018130977A discloses a length of an apex amounting to 20 mm or less in this tire. A buffer layer is situated between a carcass and a clinch. An outside end of the buffer layer is situated radially inside of a maximum width position. In the radial direction, a position of an inside end of the buffer layer agrees with a position of an outside end of a core, or the inside end of the buffer layer is situated outside the outside end of the core. The buffer layer is disposed so as to cover a contact part of the tire with a rim. The loss tangent of the buffer layer is equivalent to or less than the loss tangent of the clinch and the loss tangent of the apex. A hardness of the buffer layer is equivalent to or less than a hardness of the apex.
JP2015039926A discloses a tire comprising on a side surface having a tire maximum width position: multiple dimples that are arrayed in a plurality of circumferential rows concentric to a tire shaft; a lateral rib between the dimples adjacent in a radial direction; and a vertical rib between the dimples adjacent in a circumference direction. The lateral rib has an outside lateral surface outside in the radial direction and an inside lateral surface inside in the radial direction, and the lateral rib includes: a first lateral rib in which a height from a dimple bottom to the upper end of the inside lateral surface is the same as a height from a dimple bottom to the upper end of the outside lateral surface; and a second lateral rib in which a height from a dimple bottom to the upper end of the inside lateral surface is the same as a height from a dimple bottom to the upper end of the outside lateral surface, where the second lateral rib is arranged further inside in the radial direction than the tire maximum width position.
JP2010111173A discloses a run-flat tire including a carcass, a side reinforcing rubber layer, and a bead apex. In the bead part, a reinforcing cord layer having an inner piece extending between the body of a carcass ply and the bead apex, a middle piece continuous to the inner piece and extending inward of the tire radial direction of a bead core and an outer piece continuous to the middle piece and extending outward of the tire radial direction between a folded part and the bead apex is arranged. The reinforcing cord layer comprises at least a sheet of ply using a reinforcing cord made of aramid fibers,
JP2011042239A discloses a run-flat tire including a carcass which extends from a tread to the bead core of a bead part through a side wall, and a side-reinforcement rubber layer which has a crescent-shaped cross section and is arranged inside the carcass at the side wall. A heat-conductive rubber having a thermal conductivity coefficient of 0.3 W/(m K) or more is provided on an inner surface of the tire. At least part of the heat-conductive rubber is provided in a side-reinforcement rubber layer projection area consisting of the projection of the side-reinforcement rubber layer onto the inner surface of the tire.
EP2808177A1 discloses a pneumatic vehicle tire with run-flat properties, containing a profiled tread, a multi-layer belt structure, an inner layer, a carcass, which in the bead areas from axially inside to axially is guided around the outside around tensile cores and core profiles sitting on the cores as a carcass fold and side walls, within which at least one crescent-shaped cross-section, over the an annularly closed reinforcing profile is arranged on the circumference of the side wall. It is the object of the present invention to provide a pneumatic vehicle tire with run-flat properties, which has good driving properties and sufficient airtightness in run-flat operation as well as in normal driving, but is inexpensive to produce compared to run-flat tires of the generic type. The invention consists in that the inner layer, viewed in cross section, consists of at least two inner layer sections which touch each other in at least one overlap region and made of different rubber mixtures, the first inner layer section being located radially on the inside below the Tread area is arranged and contains a rubber mixture A containing halobutyl rubber, and wherein a second inner layer section lies at least within the cross-sectional height of a reinforcing profile and consists of at least one rubber mixture B which is free of halobutyl rubber.

### SUMMARY OF INVENTION

### Technical Problem

However, it is known that, because the tire side portions of a run-flat tire are reinforced by side reinforcing rubbers, it is easy for the rolling resistance to increase as compared with a tire that does not have a run-flat structure. Thus, for example, it has also been thought to structure the side reinforcing rubbers by using a rubber of a low viscosity. However, in such a run-flat tire, there is the possibility that the run-flat durability, which is the durability at the time of traveling in a state in which the internal pressure of the tire has decreased, will deteriorate.

In view of the above-described circumstances, an object of the present invention is to provide a run-flat tire that has decreased rolling resistance and that can ensure the run-flat durability.

### Solution to Problem

A run-flat tire relating to the present invention comprises: a pair of bead cores provided at regions that fit-together with rims forming outer edge portions of a wheel, and formed in annular shapes along a tire peripheral direction; a carcass that is formed so as to span between the pair of bead cores and has a carcass central portion extending along a tire width direction at a tire radial direction outer side, a pair of carcass side portions respectively extending from both tire width direction end portions of the carcass central portion toward tire width direction inner sides of the pair of bead cores, and a pair of folded-over portions formed so as to be continuous with the pair of carcass side portions and respectively folded over around the pair of bead cores from tire width direction inner sides toward outer sides; a belt provided along a tire radial direction outer side surface of the carcass central portion; a tread portion provided at a tire radial direction outer side of the belt; side reinforcing rubbers provided along tire width direction inner side surfaces of the carcass side portions, and formed in shapes that taper respectively toward a tire radial direction inner side and a tire radial direction outer side in a cross-section along a tire axial direction; a first inner liner provided along a tire radial direction inner side surface of the carcass central portion and tire width direction inner side surfaces of the side reinforcing rubbers, both end portions of the first inner liner running along a contour in a cross-section along a tire rotational axis direction and being respectively formed further toward a tire radial direction outer side than tire radial direction inner side end portions of the side reinforcing rubbers; and a second inner liner extending along a surface, which is at a side opposite from the carcass central portion, of the first inner liner, both end portions of the second inner liner being respectively formed further toward a tire radial direction inner side than the both end portions of the first inner liner, along a contour in a cross-section along the tire rotational axis direction.

In accordance with this run-flat tire, the first inner liner and the second inner liner are provided as an inner liner. Further, the both end portions of the first inner liner running along the contour in the cross-section along the tire rotational axis direction, are respectively formed further toward the tire radial direction outer side than the tire radial direction inner side end portions of the side reinforcing rubbers. Therefore, the rolling resistance can be decreased as compared with, for example, a tire in which the first inner liner extends respectively to side of the tire radial direction inner side end portions of the side reinforcing rubbers.

Moreover, in accordance with this run-flat tire, the second inner liner is provided that extends along the surface, which is at the side opposite from the carcass central portion, of the first inner liner, both end portions of the second inner liner are respectively formed further toward the tire radial direction inner side than the both end portions of the first inner liner, along the contour in the cross-section along the tire rotational axis direction. Therefore, the rigidity needed for reducing the rolling resistance is ensured, and the transmission of gasses from the tire width direction inner side to the outer sides can be suppressed or prevented. Due thereto, it is possible to reduce the rolling resistance and to ensure the run-flat durability, which is the suppression or prevention of excessive collapsing-in of the bead portions and the tire side portions at the time of run-flat traveling.

### Advantageous Effects of Invention

As described above, the run-flat tire relating to the present invention has the excellent effects of being able to decrease the rolling resistance and ensure the run-flat durability.

### BRIEF DESCRIPTION OF DRAWINGS

Fig. 1 is a half section illustrating one side of a cut cross-section in which a run-flat tire is cut along a tire axial direction.
Fig. 2 is a half section illustrating a cut cross-section in which a first inner liner and a second inner liner are cut along the tire axial direction.
Fig. 3 is a half section illustrating one side of a cut cross-section in which a run-flat tire relating to a first modification is cut along the tire axial direction.
Fig. 4 is a half section illustrating a cut cross-section in which a first inner liner and a second inner liner relating to a second modification are cut along the tire axial direction.
Fig. 5 is a half section illustrating one side of a cut cross-section in which a run-flat tire relating to the second modification is cut along the tire axial direction.
Fig. 6 is a half section illustrating one side of a cut cross-section in which a further run-flat tire is cut along the tire axial direction.
Fig. 7 is a half section illustrating one side of a cut cross-section in which a run-flat tire relating to a modification is cut along the tire axial direction.

### DESCRIPTION OF EMBODIMENTS

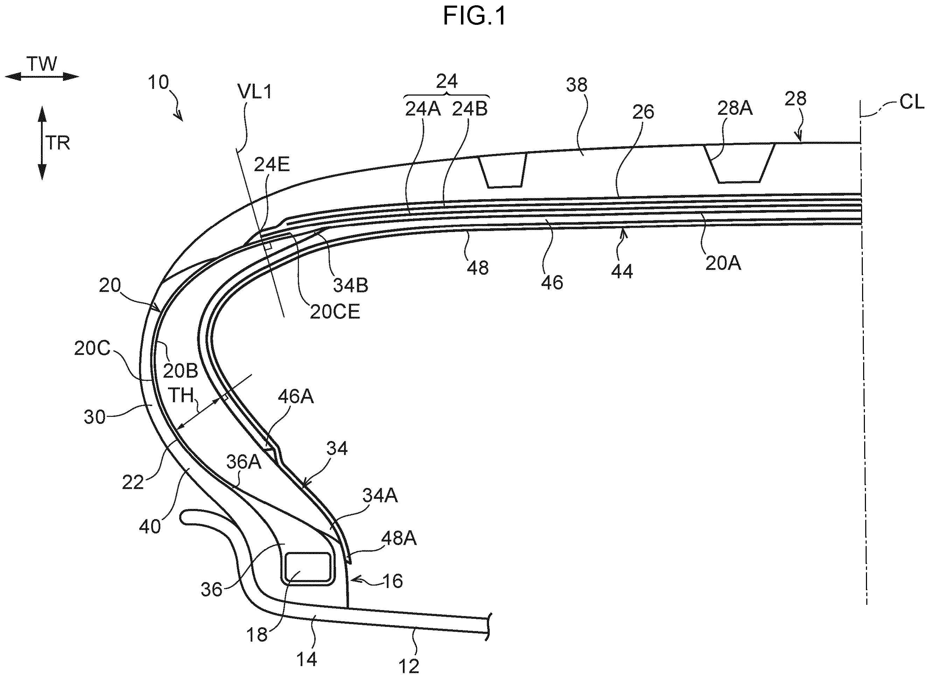

A run-flat tire 10 is described hereinafter by using Fig. 1 through Fig. 5. In the present description, description is given of the run-flat tire 10 that is used for a passenger vehicle.

Here, arrow TW in the drawings indicates the tire width direction of the run-flat tire 10, and arrow TR indicates the tire radial direction of the run-flat tire 10.

What is called tire width direction here means the direction parallel to the rotational axis of the run-flat tire 10, and is also called the tire axial direction. Further, tire radial direction means the direction orthogonal to the rotational axis of the run-flat tire 10.

Further, reference notation CL indicates the equatorial plane of the run-flat tire 10 (the tire equatorial plane). Moreover, in the present example, the rotational axis side of the run-flat tire 10 along the tire radial direction is called the "tire radial direction inner side", and the side opposite from the rotational axis of the run-flat tire 10 along the tire radial direction is called the "tire radial direction outer side".

On the other hand, the equatorial plane CL side of the run-flat tire 10 along the tire width direction is called the "tire width direction inner side", and the side opposite from the equatorial plane CL of the run-flat tire 10 along the tire width direction is called the "tire width direction outer side".

Further, in the following description, rims 14 that form the outer edge portions of a wheel 12 (refer to Fig. 1 for both) are standard rims (or "approved rims" or "recommended rims") for the applicable sizes described in the following standards. The standards are determined in accordance with industrial standards that are valid in the geographical region in which the tire is manufactured or used. For example, the standards are prescribed by the "Year Book of The Tire and Rim Association Inc." in the U.S., by the "Standards Manual of The European Tire and Rim Technical Organization" in Europe, and by the "JATMA Year Book" of the Japan Automobile Tyre Manufacturer Association, Inc. in Japan.

Only one side of the cross-sectional view along the tire rotational axis of the run-flat tire 10 that is in state of being mounted to the rims 14 and not being filled with internal pressure (having the same air pressure as the outside air), is shown in Fig. 1. The run-flat tire 10 is structured to include a pair of bead portions 16, a carcass 20, a belt 24, a belt reinforcing layer 26, a tread portion 28, and tire side portions 30. Further, the run-flat tire 10 has side reinforcing rubbers 34 and an inner liner portion 44.

The bead portions 16 are provided as a left-right pair with an interval therebetween in the tire width direction. A pair of bead cores 18 that are formed in annular shapes along the tire peripheral direction are embedded in the pair of bead portions 16, respectively. The pair of bead cores 18 are respectively structured by metal cords (e.g., steel cords), organic fiber cords, resin-coated organic fiber cords, or bead cores of a hard resin or the like (none of which are illustrated). The carcass 20, which is formed so as to span between the pair of bead cores 18, is disposed between the pair of bead cores 18.

Note that, here, description is given of a tire at which projection-shaped rim guards (rim protectors), which are for suppressing excessive deformation (collapsing toward the tire width direction outer sides) of the bead portions 16, are not provided at the outer side surfaces of the bead portions 16. However, the present invention is not limited to this, and rim guards may be provided at the outer side surfaces of the bead portions.

### (Carcass)

The carcass 20 is structured by one carcass ply 22. The carcass ply 22 is structured by plural, unillustrated cords (e.g., organic fiber cords or metal cords or the like) being covered by a covering rubber. The carcass 20 is formed in a substantially toroidal shape that is convex toward the tire radial direction outer side, between the pair of bead cores 18. Of the portion, which is formed in a substantially toroidal shape, of the carcass 20, the portion that extends along the tire width direction at the tire radial direction outer side is a carcass central portion 20A. Further, the portions, which respectively extend from the both tire width direction end portions of the carcass central portion 20A toward the tire width direction inner sides of the pair of bead cores 18, are a pair of carcass side portions 20B. At the both end portions at the bead core 18 sides of the carcass side portions 20B, the carcass 20 is folded-over around the bead cores 18 from the tire width direction inner sides toward the outer sides such that a pair of folded-over portions 20C are formed. End portions 20CE of the folded-over portions 20C are sandwiched between the belt 24 and the carcass central portion 20A in vicinities of tire width direction outer ends 24E of the belt 24. The carcass 20 that is formed in this way structures the framework of the tire.

Note that the run-flat tire 10 described here is a tire having a radial structure, and the cords (not illustrated) of the carcass ply 22 extend along the tire radial direction (the radial direction) at the carcass side portion 20B sides. Further, at the carcass central portion 20A side (the tire outer peripheral portion side), the cords of the carcass ply 22 extend in a direction intersecting the tire equatorial plane CL.

A bead filler 36, which extends from the bead core 18 side toward the tire radial direction outer side, is provided at the bead portion 16 so as to be embedded in a space formed by the carcass side portion 20B and the folded-over portion 20C of the carcass 20. The bead filler 36 is formed such that the thickness thereof decreases toward an end portion 36A that is at the tire radial direction outer side. The bead fillers 36 are formed of a rubber that is harder than side rubbers 40 that are disposed at the tire width direction outer sides of the folded-over portions 20C. Note that the shape and the material of the bead fillers 36 are not limited to those of the present embodiment.

Note that, here, the carcass 20 is described as being structured by the single carcass ply 22. However, the present invention is not limited to this, and the carcass may be structured by plural carcass plies.

### (Belt)

The belt 24 is disposed along the tire radial direction outer side surface of the carcass central portion 20A, at the tire radial direction outer side of the carcass 20. The belt 24 is structured by one or plural belt plies 24A, 24B. Here, as an example, the belt 24 is structured to include the first belt ply 24A that is at the tire radial direction inner side, and the second belt ply 24B that is disposed at the tire radial direction outer side of the first belt ply 24A and whose width is narrower than that of the first belt ply 24A.

The belt plies 24A, 24B are structured by plural cords (e.g., steel cords), which are not illustrated and are lined-up parallel to one another, being covered by a covering rubber. The cords that structure the belt plies 24A, 24B are disposed at inclines with respect to the tire peripheral direction (e.g., are inclined at angles of inclination of 15° to 30° with respect to the tire peripheral direction). Here, the cords of the first belt ply 24A and the cords of the second belt ply 24B are disposed so as to be inclined in directions opposite to one another, with respect to the tire equatorial plane CL. Namely, the belt 24 is a so-called crossed belt.

The belt reinforcing layer 26 is disposed at the tire radial direction outer side of the belt 24. For example, the belt reinforcing layer 26 is structured to include unillustrated cords that are wound along the tire peripheral direction so as to cover the entire belt 24.

A tread rubber 38 that structures the tread portion 28 is disposed at the tire radial direction outer side of the belt 24 and the belt reinforcing layer 26. The tread portion 28 is the region that contacts the road surface during traveling. Peripheral direction grooves 28A that extend along the tire peripheral direction are formed in the surface of the tread portion 28. Further, unillustrated width direction grooves that extend in the tire width direction are formed in the tread portion 28. Note that the shapes of and the numbers of the peripheral direction grooves 28A and the width direction grooves are set appropriately in accordance with the performances required of the run-flat tire 10, such as drainability, handling stability, and the like.

Note that, here, the belt 24 is described as a so-called crossed belt that is structured by the two belt plies. However, the present invention is not limited to this, and the belt may be structured by a so-called spiral belt or by a belt of another structure such as a structure in which cords are embedded in a resin layer, or the like.

### (Tire Side Portions)

The tire side portions 30 are provided between the bead portions 16 and the tire width direction end portions of the tread portion 28, at the tire width direction outer sides of the run-flat tire 10. Specifically, the side rubbers 40, which structure the tire side portions 30 and extend along the tire radial direction, are disposed so as to connect the bead portions 16 and the tire width direction end portions of the tread portion 28 at the tire width direction outer sides of the carcass 20.

### (Side Reinforcing Rubbers)

The side reinforcing rubbers 34, which are for reinforcing the tire side portions 30 with respect to load applied to the run-flat tire 10 at the time of run-flat traveling, are disposed at the tire width direction inner sides of the tire side portions 30. Specifically, the side reinforcing rubbers 34 that are formed from a single rubber material are disposed at the tire width direction inner sides of the carcass side portions 20B of the carcass 20. By providing the side reinforcing rubbers 34, the vehicle can be made to travel a predetermined distance in a state of supporting the weight of the vehicle and the vehicle occupants in a case in which the internal pressure of the run-flat tire 10 decreases due to a puncture or the like.

The side reinforcing rubber 34 extends in the tire radial direction along the inner surface of the carcass side portion 20B. Further, the side reinforcing rubber 34 is formed in a shape in which thickness TH thereof decreases (tapers) toward the bead core 18 side and the tread portion 28 side. Specifically, for example, the cross-sectional shape along the tire axial direction is formed in a substantial crescent shape. Here, the thickness TH is the length when the interval (the length) between the tire width direction inner side and tire width direction outer side surfaces of the side reinforcing rubber 34 is measured along a line perpendicular to the tire width direction inner side surface, in the state in which the run-flat tire 10 is mounted to the rims 14 and the internal pressure is zero.

An inner side end portion 34A side, which is the end portion at the tire radial direction inner side of the side reinforcing rubber 34, overlaps the bead filler 36 with the carcass 20 sandwiched therebetween. Specifically, the inner side end portion 34A side of the side reinforcing rubber 34 is disposed so as to overlap the bead filler 36 along the tire radial direction. On the other hand, an outer side end portion 34B side, which is the end portion at the tire radial direction outer side of the side reinforcing rubber 34, overlaps the belt 24 with the carcass 20 sandwiched therebetween. Specifically, the outer side end portion 34B side of the side reinforcing rubber 34 is disposed so as to overlap the belt 24 along the tire width direction.

Note that, here, the side reinforcing rubber 34 is described as being structured by a single rubber material, but the present invention is not limited to this. For example, the side reinforcing rubber may be structured with another material, such as a thermoplastic resin or the like, being the main component thereof.

Moreover, here, the side reinforcing rubber 34 is described as being structured by a single type of a rubber member, but the present invention is not limited to this. For example, the side reinforcing rubber may be structured by plural rubber members of different hardnesses.

Further, although the side reinforcing rubber 34 is described as being structured by a single type of a rubber member, the present invention is not limited to this. Provided that a rubber member is the main component thereof, the side reinforcing rubber may be structured to include, in addition thereto, materials such as, for example, fillers, short fibers, resin or the like.

Moreover, the side reinforcing rubber 34 is described as being structured by a single type of rubber member, but the present invention is not limited to this. The side reinforcing rubber may be structured so as to include a rubber member of a JIS hardness of 70 to 85 measured at 20°C by using a durometer hardness tester, in order to improve the durability at the time of run-flat traveling. Further, the side reinforcing rubber may be structured to include a rubber member having the physical property that the loss factor thereof (a factor expressing the magnitude of the viscosity of the rubber) tan<5, which is measured under the conditions of a frequency of 20 Hz, an initial strain of 10%, a dynamic strain of ±2%, and a temperature of 60°C by using a viscoelasticity spectrometer (e.g., the spectrometer manufactured by Toyo Seiki Seisakusho), is 0.10 or less.

### (Inner Liner)

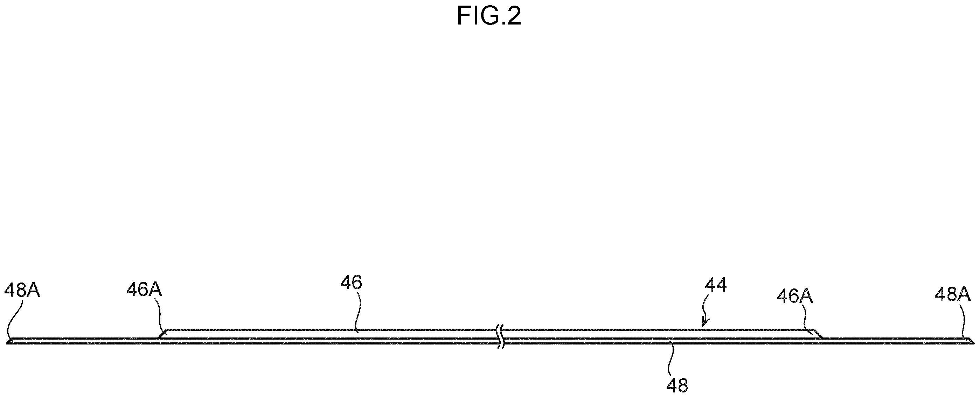

As shown in Fig. 1 and Fig. 2, the inner liner portion 44 is provided at the tire radial direction inner side of the carcass central portion 20A and the tire width direction inner sides of the side reinforcing rubbers 34, so as to run along these. The inner liner portion 44 has a first inner liner 46 and a second inner liner 48. Specifically, the first inner liner 46 is disposed along the tire radial direction inner side surface of the carcass central portion 20A and the tire width direction inner side surfaces of the side reinforcing rubbers 34. First end portions 46A at the both sides of the first inner liner 46 (only one side is illustrated in Fig. 1) running along the contour in the cross-section along the tire rotational axis direction and being respectively formed further toward the tire radial direction outer side than the inner side end portions 34A of the side reinforcing rubbers 34. Note that, here, the first end portions 46A are described as being respectively formed further toward the tire radial direction outer side than the inner side end portions 34A. However, the present invention is not limited to this, and the first end portions 46A may be formed in regions of lengths of approximately 60 to 90% of the lengths from the portion, where the carcass central portion 20A intersects the tire equatorial plane CL, toward the bead core 18 sides. Further, the second inner liner 48, which is formed so as to be thinner than the first inner liner 46, is disposed along the surface, which is at the side opposite from the carcass central portion 20A, of the first inner liner 46. Here, the thickness of the second inner liner 48 may be formed to be approximately 30 to 65% of the thickness of the first inner liner 46.

The second inner liner 48 extends respectively to the both inner side end portion 34A sides of the side reinforcing rubbers 34. Second end portions 48A at the both sides of the second inner liner 48 (only one side is illustrated in Fig. 1) running along the contour in the cross-section along the tire rotational axis direction being formed further toward the tire radial direction inner side than the first end portions 46A of the first inner liner 46. Here, the first end portions 46A are provided at regions that are approximately 45% to 85%, from the outer side end portions 34B, of the total lengths at the tire width direction inner sides of the side reinforcing rubbers 34, in the state in which the run-flat tire 10 is mounted to the rims 14 and the internal pressure is zero.

The both first end portions 46A of the first inner liner 46 are tapered shapes whose thicknesses gradually decrease toward the tire radial direction inner side respectively. Specifically, as seen in the cross-section along the tire axial direction, a slope is formed from the side reinforcing rubber 34 side of the first inner liner 46 toward the tire radial direction inner side and the side opposite from the side reinforcing rubber 34. Further, the both second end portions 48A of the second inner liner 48 are tapered shapes whose thicknesses gradually decrease toward the tire radial direction inner side respectively. Specifically, as seen in the cross-section along the tire axial direction, a slope is formed from the side reinforcing rubber 34 side of the second inner liner 48 toward the tire radial direction inner side and the side opposite from the side reinforcing rubber 34.

A rubber, through which it is more difficult for gasses to be transmitted and whose hysteresis loss (loss history) is greater than the other rubbers that structure the run-flat tire 10 (e.g., the tread rubber 38, the side rubbers 40 and the like), is used as the rubber that structures the first inner liner 46 and the second inner liner 48. Specifically, the first inner liner 46 and the second inner liner 48 are structured by, for example, a rubber whose main component is butyl rubber. What is called hysteresis loss here is known to be proportional to the loss factor tan*δ* that expresses the magnitude of the viscosity of the rubber.

Note that, here, the first inner liner 46 and the second inner liner 48 are described as being formed with butyl rubber being the main component thereof, but the present invention is not limited to this, and the first inner liner and the second inner liner may have another rubber member, a resin or a resin film as the main components thereof.

### (Operation, Effects)

Operation and effects of the run-flat tire 10 relating to the present embodiment are described next.

In accordance with the run-flat tire 10 relating to the present embodiment, the first inner liner 46 and the second inner liner 48, which is formed to be thinner than the first inner liner 46, are disposed at the inner liner portion 44. Further, both of the first end portions 46A of the first inner liner 46 are respectively formed further toward the tire radial direction outer side than the inner side end portions 34A of the side reinforcing rubbers 34. Therefore, the rolling resistance can be reduced as compared with a tire in which the first inner liner 46 is extended to the inner side end portion 34A sides of the side reinforcing rubbers 34. Further, by reducing the rolling resistance, the fuel efficiency can be improved.

When the internal pressure of the tire decreases for any reason, the tire side portions 30 that form the tire width direction outer sides deform. Specifically, tensile force is applied in the tire radial direction to the portions, which are further toward the tire width direction outer sides than the neutral axes (not illustrated), of the tire side portions 30. Therefore, at a tire that does not have a run-flat structure, the tire extendingly deforms (extends) along the tire radial direction. Further, compressive force is applied in the tire radial direction to the portions, which are further toward the tire width direction inner side than the neutral axes, of the tire side portions 30. Therefore, in a tire that does not have a run-flat structure, the tire compressively deforms in the tire radial direction.

In accordance with this run-flat tire 10, the first inner liner 46 and the second inner liner 48, which extends to the both inner side end portion 34A sides of the side reinforcing rubbers 34, are provided at the tire width direction inner side surfaces of the side reinforcing rubbers 34. Therefore, the rigidity needed for reducing the rolling resistance is ensured, and the transmission of gasses from the tire width direction inner side to the outer sides can be suppressed or prevented. Due thereto, it is possible to reduce the rolling resistance and to ensure the run-flat durability, which is the suppression or prevention of excessive collapsing-in of the bead portions 16 and the tire side portions 30 at the time of run-flat traveling.

Moreover, in accordance with the run-flat tire 10, the first end portions 46A of the first inner liner 46 are formed in tapered shapes, and the second end portions 48A of the second inner liner 48 are formed in tapered shapes. Therefore, in a case in which the run-flat tire 10 deforms, the forces by which the first end portions 46A and the second end portions 48A of the first inner liner 46 and the second inner liner 48 push the side reinforcing rubbers can be made to be small, as compared with a case in which the end portions, which run along the contour in the cross-section along the tire rotational axis direction, are not formed in tapered shapes. Due thereto, increasing of the forces that are applied to the side reinforcing rubbers 34 at the time of run-flat traveling can be suppressed or prevented, and the durability of the run-flat tire 10 can be improved.

As described above, the run-flat tire 10 has decreased rolling resistance and can ensure the run-flat durability.

Moreover, in accordance with the run-flat tire 10, the vertical spring constant (an index expressing a state in which the elasticity in the vertical direction of the vehicle to which the tire is mounted is small) at the time of usual traveling of the run-flat tire 10 can be reduced. Therefore, the riding comfort can be improved, and the run-flat durability at the time of run-flat traveling can be ensured.

### (First Modification)

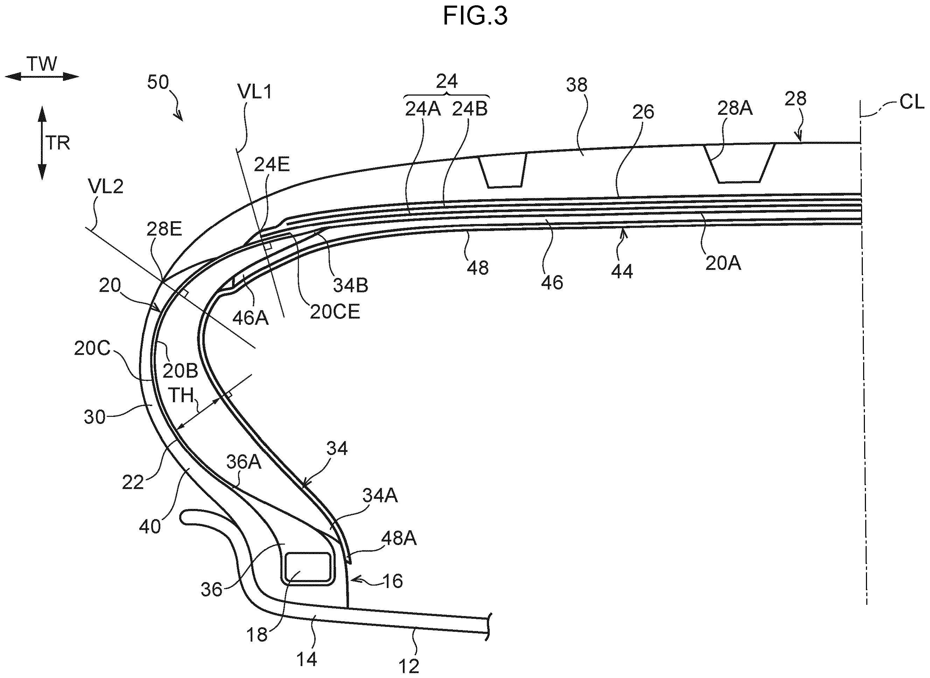

Next, a first modification of a run-flat tire 50 is described by using Fig. 3. Note that structural portions that are the same as those of the above-described first embodiment are denoted by the same reference numerals, and description thereof is omitted.

In accordance with the run-flat tire 50, as shown in Fig. 3, the both first end portions 46A of the first inner liner 46 are respectively positioned between a pair of first imaginary lines VL1 and a pair of second imaginary lines VL2 as seen in a cross-section along the tire rotational axis. Here, as seen in the cross-section along the tire rotational axis, the pair of first imaginary lines VL1 are lines that respectively pass-through the tire width direction outer ends 24E of the belt and respectively extend orthogonally to the carcass 20. Further, the pair of second imaginary lines VL2 are lines that respectively pass-through tire width direction outer ends 28E of the tread portion 28 and respectively extend orthogonally to the carcass 20. Here, in the state in which the run-flat tire 10 is mounted to the rims 14 and the internal pressure is zero, of the length of the tire width direction inner side of the side reinforcing rubber 34 from the first imaginary line VL1 to the second imaginary line VL2, the first end portion 46A may be formed in the region that is approximately 15% of this length toward the width direction inner side from the first imaginary line VL1. Further, in the state in which the run-flat tire 10 is mounted to the rims 14 and the internal pressure is zero, of the length of the tire width direction inner side of the side reinforcing rubber 34 from the first imaginary line VL1 to the second imaginary line VL2, the first end portion 46A may be formed in the region that is approximately 30% of this length toward the width direction outer side from the first imaginary line VL1.

In accordance with the run-flat tire 50, the both end portions of the first inner liner 46 running along the contour in the cross-section along the tire rotational axis direction being respectively positioned between the first imaginary lines VL1 and the second imaginary lines VL2. Therefore, owing to the second inner liner 48, the rigidity that is needed in order to reduce the rolling resistance is ensured, and the transmission of gasses from the tire width direction inner side toward the outer sides is suppressed or prevented, and the first inner liner 46 can be formed to be small. Due thereto, the rolling resistance is reduced, and the run-flat durability can be ensured.

### (Second Modification)

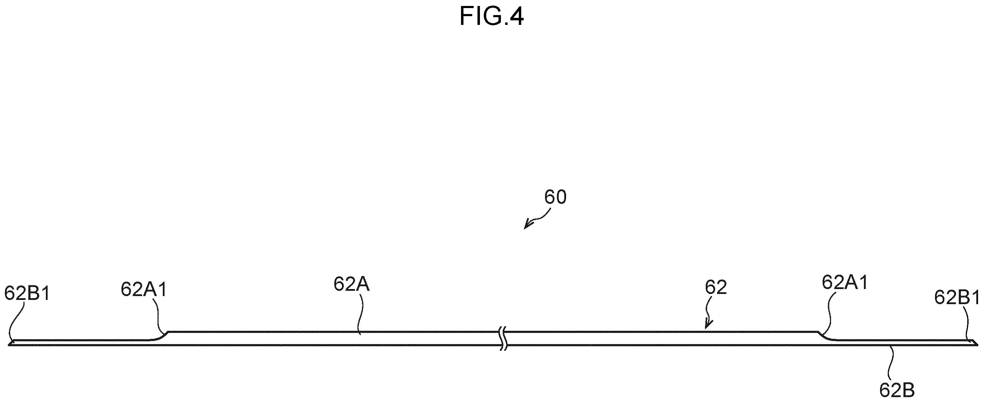

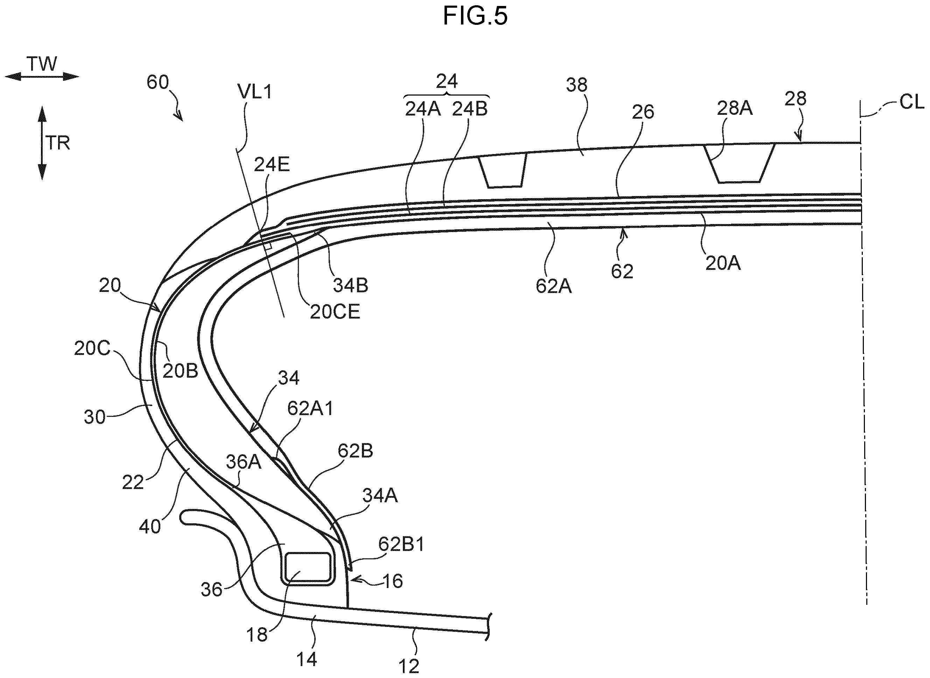

Next, a second modification of a run-flat tire 60 is described by using Fig. 4 and Fig. 5.

Note that structural portions that are the same as those of the above-described example are denoted by the same reference numerals, and description thereof is omitted.

In accordance with the run-flat tire 60, an inner liner portion 62 is formed integrally as shown in Fig. 4. Specifically, an outer side portion 62A that corresponds to the first inner liner 46 and an inner side portion 62B that corresponds to the second inner liner 48 are formed integrally.

Both first end portions 62A1 of the outer side portion 62A running along the contour in the cross-section along the tire rotational axis direction being formed in substantial arc shapes that are concave toward the outer sides in the direction along the contour in the cross-section along the tire rotational axis direction, of the inner liner portion 62 as seen in the cross-section along the tire axial direction. Further, as shown in Fig. 5, at both second end portions 62B1 of the inner side portion 62B running along the contour in the cross-section along the tire rotational axis direction, slopes are formed from the side reinforcing rubber 34 sides of the inner liner portion 62 toward the tire radial direction inner side and the sides opposite from the side reinforcing rubbers 34, as seen in the cross-section along the tire axial direction.

In accordance with the run-flat tire 60, at the inner liner portion 62, the outer side portion 62A and the inner side portion 62B are formed integrally. Therefore, increases in the number of work processes and the manufacturing cost for providing the inner liner portion 62 are suppressed, and the rolling resistance is reduced, and the run-flat durability can be ensured.

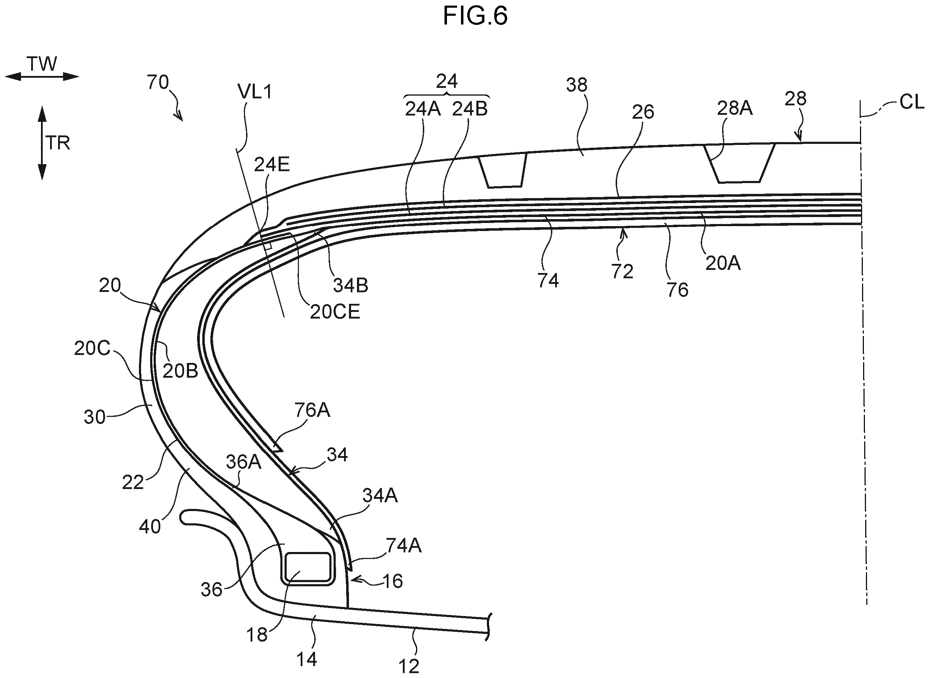

Next, a further run-flat tire 70 is described by using Fig. 6. Note that structural portions that are the same as those of the above-described first embodiment are denoted by the same reference numerals, and description thereof is omitted.

In accordance with the run-flat tire 70, a first inner liner 74 is disposed along the tire radial direction inner side surface of the carcass central portion 20A and the tire width direction inner side surfaces of the side reinforcing rubbers 34. The first inner liner 74 extends to the both inner side end portions 34A of the side reinforcing rubbers 34. First end portions 74A, which are the both end portions that run along the contour in the cross-section along the tire rotational axis direction, are formed respectively at the both inner side end portion 34A sides of the side reinforcing rubbers 34. Further, a second inner liner 76 that is formed to be thicker than the first inner liner 74 extends along the surface, which is at the side opposite from the carcass central portion 20A, of the first inner liner 74. Second end portions 76A, which are the both end portions that run along the contour in the cross-section along the tire rotational axis direction, of the second inner liner 76 are respectively formed further toward the tire radial direction outer side than the first end portions 74A of the first inner liner 74. Here, the thickness of the first inner liner 74 may be formed to be approximately 30 to 65% of the thickness of the second inner liner 76.

In accordance with this run-flat tire 70, the second end portions 76A of the second inner liner 76 are respectively formed further toward the tire radial direction outer side than the first end portions 74A of the first inner liner 74. Therefore, the rolling resistance can be decreased, as compared with a tire in which the second inner liner 76 extends respectively to the both inner side end portion 34A sides of the side reinforcing rubbers 34. Moreover, in accordance with the run-flat tire 70, the first inner liner 74 is provided along the tire width direction inner side surfaces of the side reinforcing rubbers 34, to the both inner side end portion 34A sides of the side reinforcing rubbers 34. Therefore, the rigidity needed for reducing the rolling resistance is ensured, and the transmission of gasses from the tire width direction inner side to the outer sides can be suppressed or prevented. Due thereto, it is possible to ensure the run-flat durability, which is a reduction in the rolling resistance and is the suppression or prevention of excessive collapsing-in of the bead portions 16 and the tire side portions 30 at the time of run-flat traveling.

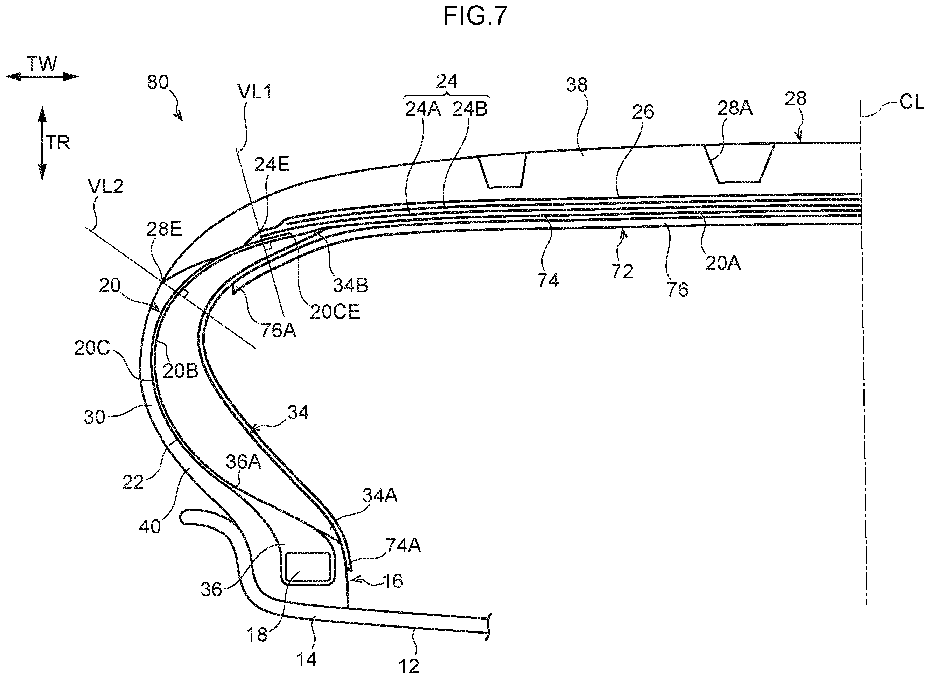

Next, a further run-flat tire 80 is described by using Fig. 7. Note that structural portions that are the same as those of the above-described second embodiment are denoted by the same reference numerals, and description thereof is omitted.

In accordance with the run-flat tire 80, as shown in Fig. 7, the both second end portions 76A of the second inner liner 76 are respectively positioned between the pair of first imaginary lines VL1 and the pair of second imaginary lines VL2 as seen in the cross-section along the tire rotational axis. Here, as seen in the cross-section along the tire rotational axis, the pair of first imaginary lines VL1 are lines that respectively pass-through the tire width direction outer ends 24E of the belt and respectively extend orthogonally to the carcass 20. Further, the pair of second imaginary lines VL2 are lines that respectively pass-through the tire width direction outer ends 28E of the tread portion 28 and respectively extend orthogonally to the carcass 20. Here, in the state in which the run-flat tire 10 is mounted to the rims 14 and the internal pressure is zero, of the length of the tire width direction inner side of the side reinforcing rubber 34 from the first imaginary line VL1 to the second imaginary line VL2, the second end portion 76A may be formed in the region that is approximately 15% of this length toward the width direction inner side from the first imaginary line VL1. Further, in the state in which the run-flat tire 10 is mounted to the rims 14 and the internal pressure is zero, of the length of the tire width direction inner side of the side reinforcing rubber 34 from the first imaginary line VL1 to the second imaginary line VL2, the second end portion 76A may be formed in the region that is approximately 30% of this length toward the width direction outer side from the first imaginary line VL1.

In accordance with the run-flat tire 80, the both second end portions 76A of the second inner liner 76 are respectively positioned between the first imaginary lines VL1 and the second imaginary lines VL2. Therefore, owing to the first inner liner 74, the rigidity that is needed in order to reduce the rolling resistance is ensured, and the transmission of gasses from the tire width direction inner side toward the outer sides is suppressed or prevented, and the second inner liner 76 can be formed to be small. Due thereto, the rolling resistance is reduced, and the run-flat durability can be ensured.

### [Other Embodiments]

Note that, the present disclosure is not limited to the run-flat tires 10, 50, 60, 70, 80 for passenger vehicles that have been described here. The present disclosure can also be applied to run-flat tires that are used in vehicles other than passenger vehicles.

The first end portions of the first inner liner and the second end portions of the second inner liner may respectively be formed in vicinities of the end portions of the belt 24, e.g., between the pair of first imaginary lines VL1 and the pair of second imaginary lines VL2 as seen in the cross-section along the tire rotational axis.

## Claims

1. A run-flat tire (10) comprising:
a pair of bead cores (18) that are provided at regions that fit together with rims (14) forming outer edge portions of a wheel (12), and that are formed in annular shapes along a tire peripheral direction;
a carcass (20) that is formed so as to span between the pair of bead cores (18) and has a carcass central portion (20A) extending along a tire width direction at a tire radial direction outer side, a pair of carcass side portions (20B) respectively extending from both tire width direction end portions of the carcass central portion (20A) toward tire width direction inner sides of the pair of bead cores (18), and a pair of folded-over portions (20C) formed so as to be continuous with the pair of carcass side portions (20B) and respectively folded over around the pair of bead cores (18) from tire width direction inner sides toward outer sides;
a belt (24) provided along a tire radial direction outer side surface of the carcass central portion (20A);
a tread portion (28) provided at a tire radial direction outer side of the belt (24);
side reinforcing rubber members (34) provided along tire width direction inner side surfaces of the carcass side portions (20B), and formed in shapes that taper respectively toward a tire radial direction inner side and a tire radial direction outer side in a cross-section along a tire axial direction;
a first inner liner portion (46) provided along a tire radial direction inner side surface of the carcass central portion (20A) and tire width direction inner side surfaces of the side reinforcing rubber members (34), both end portions of the first inner liner portion (46) running along a contour in a cross-section along a tire rotational axis direction and being respectively formed further toward a tire radial direction outer side than tire radial direction inner side end portions of the side reinforcing rubber members (34); and
a second inner liner portion (48) extending along a surface, which is at a side opposite from the carcass central portion (20A), of the first inner liner portion (46), both end portions of the second inner liner portion (48) being respectively formed further toward a tire radial direction inner side than the both end portions of the first inner liner portion (46), along a contour in a cross-section along the tire rotational axis direction;
wherein the first inner liner portion (46) and the second inner liner (48) portion are formed integrally.

2. The run-flat tire (10) of claim 1, wherein the both end portions of the first inner liner portion (46) running along a contour in a cross-section along the tire rotational axis direction are respectively positioned between a pair of first imaginary lines (VL1), which respectively pass-through both tire width direction end portions of the belt (24) and respectively extend orthogonally to the carcass (20), and a pair of second imaginary lines (VL2), which respectively pass-through both tire width direction end portions of the tread portion (28) and respectively extend orthogonally to the carcass (20), as seen in a cross-section along the tire rotational axis.

3. A run-flat tire (10) comprising:
a pair of bead cores (18) that are provided at regions that fit-together with rims (14) forming outer edge portions of a wheel (12), and that are formed in annular shapes along a tire peripheral direction;
a carcass (20) that is formed so as to span between the pair of bead cores (18) and has a carcass central portion (20A) extending along a tire width direction at a tire radial direction outer side, a pair of carcass side portions (20B) respectively extending from both tire width direction end portions of the carcass central portion (20A) toward tire width direction inner sides of the pair of bead cores (18), and a pair of folded-over portions (20C) formed so as to be continuous with the pair of carcass side portions (20B) and respectively folded over around the pair of bead cores (18) from tire width direction inner sides toward outer sides;
a belt (24) provided along a tire radial direction outer side surface of the carcass central portion (20A);
a tread portion (28) provided at a tire radial direction outer side of the belt (24);
side reinforcing rubber members (34) provided along tire width direction inner side surfaces of the carcass side portions (20B), and formed in shapes that taper respectively toward a tire radial direction inner side and a tire radial direction outer side in a cross-section along a tire axial direction;
a first inner liner portion (46) provided along a tire radial direction inner side surface of the carcass central portion (20A) and tire width direction inner side surfaces of the side reinforcing rubber members (34), both end portions of the first inner liner portion (46) running along a contour in a cross-section along a tire rotational axis direction and being respectively formed further toward a tire radial direction inner side than tire radial direction inner side end portions of the side reinforcing rubber members (34); and
a second inner liner portion (48) extending along a surface, which is at a side opposite from the carcass central portion (20A), of the first inner liner portion (46), both end portions of the second inner liner portion (48) being respectively formed further toward a tire radial direction outer side than the both end portions of the first inner liner portion (46), along a contour in a cross-section along the tire rotational axis direction;
wherein the first inner liner portion (46) and the second inner liner portion (48) are formed integrally.

4. The run-flat tire (10) of claim 3, wherein the both end portions of the second inner liner portion (48) running along a contour in a cross-section along the tire rotational axis direction are respectively positioned between a pair of first imaginary lines (VL1), which respectively pass-through both tire width direction end portions of the belt (24) and respectively extend orthogonally to the carcass (20), and a pair of second imaginary lines (VL2), which respectively pass-through both tire width direction end portions of the tread portion (28) and respectively extend orthogonally to the carcass (20), as seen in a cross-section along the tire rotational axis.

5. The run-flat tire (10) of any one of claim 1 through claim 4, wherein the both end portions of the first inner liner portion (46) running along a contour in a cross-section along the tire rotational axis direction, respectively are tapered shapes having thicknesses that gradually decrease toward a tire radial direction inner side, and the both end portions of the second inner liner portion (48) running along a contour in a cross-section along the tire rotational axis direction, respectively are tapered shapes having thicknesses that gradually decrease toward the tire radial direction inner side.

6. The run-flat tire (10) of any one of claim 1 through claim 5, wherein an outer side portion (62A) that correspond to the first inner liner portion (46) and an inner side portion (62B) that correspond to the second inner liner portion (48) are formed integrally.

## Patentansprüche

1. Notlaufreifen (10), der Folgendes umfasst:
ein Paar von Wulstkernen (18), die an Bereichen bereitgestellt sind, die mit Felgen (14) zusammenpassen, die Außenkantenabschnitte eines Rades (12) bilden, und die in ringförmigen Gestalten entlang einer Reifenumfangsrichtung gebildet sind;
eine Karkasse (20), die so gebildet ist, dass sie sich zwischen dem Paar von Wulstkernen (18) erstreckt und einen Karkassenmittelabschnitt (20A), der sich entlang einer Reifenbreitenrichtung an einer Reifenradialrichtungs-Außenseite erstreckt, ein Paar von Karkassenseitenabschnitten (20B), die sich jeweils von beiden Reifenbreitenrichtungs-Endabschnitten des Karkassenmittelabschnitts (20A) in Richtung von Reifenbreitenrichtungs-Innenseiten des Paares von Wulstkernen (18) erstrecken, und ein Paar von umgeschlagenen Abschnitten (20C) aufweist, die so gebildet sind, dass sie fortlaufend mit dem Paar von Karkassenseitenabschnitten (20B) sind und jeweils um das Paar von Wulstkernen (18) von Reifenbreitenrichtungs-Innenseiten in Richtung von - Außenseiten umgeschlagen sind;
einen Gürtel (24), der entlang einer Reifenradialrichtungs-Außenseitenoberfläche des Karkassenmittelabschnitts (20A) bereitgestellt ist;
einen Laufflächenabschnitt (28), der an einer Reifenradialrichtungs-Außenseite des Gürtels (24) bereitgestellt ist;
Seitenverstärkungsgummielemente (34), die entlang Reifenbreitenrichtungs-Innenseitenoberflächen der Karkassenseitenabschnitte (20B) bereitgestellt sind und in Gestalten gebildet sind, die sich jeweils in Richtung einer Reifenradialrichtungs-Innenseite und einer Reifenradialrichtungs-Außenseite in einem Querschnitt entlang einer Reifenaxialrichtung verjüngen;
einen ersten Innerliner-Abschnitt (46), der entlang einer Reifenradialrichtungs-Innenseitenoberfläche des Karkassenmittelabschnitts (20A) und Reifenbreitenrichtungs-Innenseitenoberflächen der Seitenverstärkungsgummielemente (34) bereitgestellt ist, wobei beide Endabschnitte des ersten Innerliner-Abschnitts (46) entlang einer Kontur in einem Querschnitt entlang einer Reifenrotationsachsenrichtung verlaufen und jeweils weiter in Richtung einer Reifenradialrichtungs-Außenseite gebildet sind als Reifenradialrichtungs-Innenseitenendabschnitte der Seitenverstärkungsgummielemente (34); und
einen zweiten Innerliner-Abschnitt (48), der sich entlang einer Oberfläche, die sich an einer Seite gegenüber von dem Karkassenmittelabschnitt (20A) befindet, des ersten Innerliner-Abschnitts (46) erstreckt, wobei beide Endabschnitte des zweiten Innerliner-Abschnitts (48) jeweils weiter in Richtung einer Reifenradialrichtungs-Innenseite gebildet sind als die beiden Endabschnitte des ersten Innerliner-Abschnitts (46), entlang einer Kontur in einem Querschnitt entlang der Reifenrotationsachsenrichtung;
wobei der erste Innerliner-Abschnitt (46) und der zweite Innerliner-Abschnitt (48) einstückig gebildet sind.

2. Notlaufreifen (10) nach Anspruch 1, wobei die beiden Endabschnitte des ersten Innerliner-Abschnitts (46), die entlang einer Kontur in einem Querschnitt entlang der Reifenrotationsachsenrichtung verlaufen, jeweils zwischen einem Paar von ersten imaginären Linien (VL1), die jeweils durch beide Reifenbreitenrichtungs-Endabschnitte des Gürtels (24) hindurchgehen und sich jeweils orthogonal zu der Karkasse (20) erstrecken, und einem Paar von zweiten imaginären Linien (VL2), die jeweils durch beide Reifenbreitenrichtungs-Endabschnitte des Laufflächenabschnitts (28) hindurchgehen und sich jeweils orthogonal zur Karkasse (20) erstrecken, positioniert sind, wie in einem Querschnitt entlang der Reifenrotationsachse zu sehen ist.

3. Notlaufreifen (10), der Folgendes umfasst:
ein Paar von Wulstkernen (18), die an Bereichen bereitgestellt sind, die mit Felgen (14) zusammenpassen, die Außenkantenabschnitte eines Rades (12) bilden, und die in ringförmigen Gestalten entlang einer Reifenumfangsrichtung gebildet sind;
eine Karkasse (20), die so gebildet ist, dass sie sich zwischen dem Paar von Wulstkernen (18) erstreckt und einen Karkassenmittelabschnitt (20A), der sich entlang einer Reifenbreitenrichtung an einer Reifenradialrichtungs-Außenseite erstreckt, ein Paar von Karkassenseitenabschnitten (20B), die sich jeweils von beiden Reifenbreitenrichtungs-Endabschnitten des Karkassenmittelabschnitts (20A) in Richtung von Reifenbreitenrichtungs-Innenseiten des Paares von Wulstkernen (18) erstrecken, und ein Paar von umgeschlagenen Abschnitten (20C) aufweist, die so gebildet sind, dass sie fortlaufend mit dem Paar von Karkassenseitenabschnitten (20B) sind und jeweils um das Paar von Wulstkernen (18) von Reifenbreitenrichtungs-Innenseiten in Richtung von - Außenseiten umgeschlagen sind;
einen Gürtel (24), der entlang einer Reifenradialrichtungs-Außenseitenoberfläche des Karkassenmittelabschnitts (20A) bereitgestellt ist;
einen Laufflächenabschnitt (28), der an einer Reifenradialrichtungs-Außenseite des Gürtels (24) bereitgestellt ist;
Seitenverstärkungsgummielemente (34), die entlang Reifenbreitenrichtungs-Innenseitenoberflächen der Karkassenseitenabschnitte (20B) bereitgestellt sind und in Gestalten gebildet sind, die sich jeweils in Richtung einer Reifenradialrichtungs-Innenseite und einer Reifenradialrichtungs-Außenseite in einem Querschnitt entlang einer Reifenaxialrichtung verjüngen;
einen ersten Innerliner-Abschnitt (46), der entlang einer Reifenradialrichtungs-Innenseitenoberfläche des Karkassenmittelabschnitts (20A) und Reifenbreitenrichtungs-Innenseitenoberflächen der Seitenverstärkungsgummielemente (34) bereitgestellt ist, wobei beide Endabschnitte des ersten Innerliner-Abschnitts (46) entlang einer Kontur in einem Querschnitt entlang einer Reifenrotationsachsenrichtung verlaufen und jeweils weiter in Richtung einer Reifenradialrichtungs-Innenseite gebildet sind als Reifenradialrichtungs-Innenseitenendabschnitte der Seitenverstärkungsgummielemente (34); und
einen zweiten Innerliner-Abschnitt (48), der sich entlang einer Oberfläche, die sich an einer Seite gegenüber von dem Karkassenmittelabschnitt (20A) befindet, des ersten Innerliner-Abschnitts (46) erstreckt, wobei beide Endabschnitte des zweiten Innerliner-Abschnitts (48) jeweils weiter in Richtung einer Reifenradialrichtungs-Außenseite gebildet sind als die beiden Endabschnitte des ersten Innerliner-Abschnitts (46), entlang einer Kontur in einem Querschnitt entlang der Reifenrotationsachsenrichtung;
wobei der erste Innerliner-Abschnitt (46) und der zweite Innerliner-Abschnitt (48) einstückig gebildet sind.

4. Notlaufreifen (10) nach Anspruch 3, wobei die beiden Endabschnitte des zweiten Innerliner-Abschnitts (48), die entlang einer Kontur in einem Querschnitt entlang der Reifenrotationsachsenrichtung verlaufen, jeweils zwischen einem Paar von ersten imaginären Linien (VL1), die jeweils durch beide Reifenbreitenrichtungs-Endabschnitte des Gürtels (24) hindurchgehen und sich jeweils orthogonal zu der Karkasse (20) erstrecken, und einem Paar von zweiten imaginären Linien (VL2), die jeweils durch beide Reifenbreitenrichtungs-Endabschnitte des Laufflächenabschnitts (28) hindurchgehen und sich jeweils orthogonal zur Karkasse (20) erstrecken, positioniert sind, wie in einem Querschnitt entlang der Reifenrotationsachse zu sehen ist.

5. Notlaufreifen (10) nach einem von Anspruch 1 bis Anspruch 4, wobei die beiden Endabschnitte des ersten Innerliner-Abschnitts (46), die entlang einer Kontur in einem Querschnitt entlang der Reifenrotationsachsenrichtung verlaufen, jeweils verjüngte Gestalten haben, die Dicken aufweisen, die nach und nach in Richtung einer Reifenradialrichtungs-Innenseite abnehmen, und die beiden Endabschnitte des zweiten Innerliner-Abschnitts (48), die entlang einer Kontur in einem Querschnitt entlang der Reifenrotationsachsenrichtung verlaufen, jeweils verjüngte Gestalten haben, die Dicken aufweisen, die nach und nach in Richtung der Reifenradialrichtungs-Innenseite abnehmen.

6. Notlaufreifen (10) nach einem von Anspruch 1 bis Anspruch 5, wobei ein Außenseitenabschnitt (62A), der dem ersten Innerliner-Abschnitt (46) entspricht, und ein Innenseitenabschnitt (62B), der dem zweiten Innerliner-Abschnitt (48) entspricht, einstückig gebildet sind.

## Revendications

1. Pneumatique à roulage à plat (10), comprenant :
une paire de tringles (18) qui sont fournies au niveau de régions qui sont ajustées avec des jantes (14) formant des parties de bordure externe d'une roue (12) et qui sont formées dans des formes annulaires le long d'une direction périphérique du pneumatique ;
une carcasse (20) qui est formée de sorte à s'étendre entre la paire de tringles (18) et qui comporte une partie centrale de carcasse (20A) s'étendant le long d'une direction de la largeur du pneumatique, au niveau d'un côté externe dans une direction radiale du pneumatique, une paire de parties latérales de carcasse (20B) s'étendant respectivement à partir des deux parties d'extrémité, dans la direction de la largeur du pneumatique, de la partie centrale de carcasse (20A) vers des côtés internes, dans la direction de la largeur du pneumatique, de la paire de tringles (18), et une paire de parties repliées (20C) formées de sorte à être continues par rapport à la paire de parties latérales de carcasse (20B) et respectivement repliées autour de la paire de tringles (18), depuis des côtés internes, dans la direction de la largeur du pneumatique, vers des côtés externes ;
une ceinture (24) fournie le long d'une surface latérale externe, dans la direction radiale du pneumatique, de la partie centrale de carcasse (20A) ;
une partie de bande de roulement (28) fournie au niveau d'un côté externe, dans la direction radiale du pneumatique, de la ceinture (24) ;
des éléments de gomme de renforcement latéral (34) fournis le long de surfaces de côté interne, dans la direction de la largeur du pneumatique, des parties latérales de carcasse (20B), et formés en des formes qui sont effilées respectivement vers un côté interne, dans la direction radiale du pneumatique, et un côté externe, dans la direction radiale du pneumatique, dans une section transversale le long d'une direction axiale du pneumatique ;
une première partie de revêtement interne (46) fournie le long d'une surface de côté interne, dans la direction radiale du pneumatique, de la partie centrale de carcasse (20A) et de surfaces de côté interne, dans la direction de la largeur du pneumatique, des éléments de gomme de renforcement latéral (34), les deux parties d'extrémité de la première partie de revêtement interne (46) s'allongeant le long d'un contour, dans une section transversale le long d'une direction d'un axe de rotation du pneumatique, et étant formées respectivement davantage vers un côté externe, dans la direction radiale du pneumatique, que des parties d'extrémité de côté interne, dans la direction radiale du pneumatique, des éléments de gomme de renforcement latéral (34) ; et
une deuxième partie de revêtement interne, (48) s'étendant le long d'une surface qui se trouve au niveau d'un côté opposé à la partie centrale de carcasse (20A), de la première partie de revêtement interne (46), les deux parties d'extrémité de la deuxième partie de revêtement interne (48) étant respectivement formées davantage vers un côté interne, dans la direction radiale du pneumatique, que les deux parties d'extrémité de la première partie de revêtement interne (46), le long d'un contour dans une section transversale le long de la direction de l'axe de rotation du pneumatique ;
dans lequel la première partie de revêtement interne (46) et la deuxième partie de revêtement interne (48) sont formées d'un seul tenant.

2. Pneumatique à roulage à plat (10) selon la revendication 1, dans lequel les deux parties d'extrémité de la première partie de revêtement interne (46) s'allongeant le long d'un contour dans une section transversale le long de la direction de l'axe de rotation du pneumatique sont respectivement positionnées entre une paire de premières lignes imaginaires (VL1), qui passent respectivement à travers les deux parties d'extrémité, dans la direction de la largeur du pneumatique, de la ceinture (24), et s'étendent respectivement de manière orthogonale par rapport à la carcasse (20), et une paire de deuxièmes lignes imaginaires (VL2), qui passent respectivement à travers les deux parties d'extrémité, dans la direction de la largeur du pneumatique, de la partie de bande de roulement (28), et s'étendent respectivement de manière orthogonale par rapport à la carcasse (20), comme vues en section transversale le long de l'axe de rotation du pneumatique.

3. Pneumatique à roulage à plat (10), comprenant :
une paire de tringles (18) qui sont fournies au niveau de régions qui sont ajustées avec des jantes (14) formant des parties de bordure externe d'une roue (12) et qui sont formées dans des formes annulaires le long d'une direction périphérique du pneumatique ;
une carcasse (20) qui est formée de sorte à s'étendre entre la paire de tringles (18) et qui comporte une partie centrale de carcasse (20A) s'étendant le long d'une direction de la largeur du pneumatique, au niveau d'un côté externe dans une direction radiale du pneumatique, une paire de parties latérales de carcasse (20B) s'étendant respectivement à partir des deux parties d'extrémité, dans la direction de la largeur du pneumatique, de la partie centrale de carcasse (20A) vers des côtés internes, dans la direction de la largeur du pneumatique, de la paire de tringles (18), et une paire de parties repliées (20C) formées de sorte à être continues par rapport à la paire de parties latérales de carcasse (20B) et respectivement repliées autour de la paire de tringles (18), depuis des côtés internes, dans la direction de la largeur du pneumatique, vers des côtés externes ;
une ceinture (24) fournie le long d'une surface latérale externe, dans la direction radiale du pneumatique, de la partie centrale de carcasse (20A) ;
une partie de bande de roulement (28) fournie au niveau d'un côté externe, dans la direction radiale du pneumatique, de la ceinture (24) ;
des éléments de gomme de renforcement latéral (34) fournis le long de surfaces de côté interne, dans la direction de la largeur du pneumatique, des parties latérales de carcasse (20B), et formés en des formes qui sont effilées respectivement vers un côté interne, dans la direction radiale du pneumatique, et un côté externe, dans la direction radiale du pneumatique, dans une section transversale le long d'une direction axiale du pneumatique ;
une première partie de revêtement interne (46) fournie le long d'une surface de côté interne, dans la direction radiale du pneumatique, de la partie centrale de carcasse (20A) et de surfaces de côté interne, dans la direction de la largeur du pneumatique, des éléments de gomme de renforcement latéral (34), les deux parties d'extrémité de la première partie de revêtement interne (46) s'allongeant le long d'un contour, dans une section transversale le long d'une direction d'un axe de rotation du pneumatique, et étant formées respectivement davantage vers un côté interne, dans la direction radiale du pneumatique, que des parties d'extrémité de côté interne, dans la direction radiale du pneumatique, des éléments de gomme de renforcement latéral (34) ; et
une deuxième partie de revêtement interne (48) s'étendant le long d'une surface qui se trouve au niveau d'un côté opposé à la partie centrale de carcasse (20A), de la première partie de revêtement interne (46), les deux parties d'extrémité de la deuxième partie de revêtement interne (48) étant respectivement formées davantage vers un côté externe, dans la direction radiale du pneumatique, que les deux parties d'extrémité de la première partie de revêtement interne (46), le long d'un contour dans une section transversale le long de la direction de l'axe de rotation du pneumatique ;
dans lequel la première partie de revêtement interne (46) et la deuxième partie de revêtement interne (48) sont formées d'un seul tenant.

4. Pneumatique à roulage à plat (10) selon la revendication 3, dans lequel les deux parties d'extrémité de la deuxième partie de revêtement interne (48) s'allongeant le long d'un contour dans une section transversale le long de la direction de l'axe de rotation du pneumatique sont respectivement positionnées entre une paire de premières lignes imaginaires (VL1), qui passent respectivement à travers les deux parties d'extrémité, dans la direction de la largeur du pneumatique, de la ceinture (24), et s'étendent respectivement de manière orthogonale par rapport à la carcasse (20), et une paire de deuxièmes lignes imaginaires (VL2), qui passent respectivement à travers les deux parties d'extrémité, dans la direction de la largeur du pneumatique, de la partie de bande de roulement (28), et s'étendent respectivement de manière orthogonale par rapport à la carcasse (20), comme vues en section transversale le long de l'axe de rotation du pneumatique.

5. Pneumatique à roulage à plat (10) selon l'une quelconque des revendications 1 à 4, dans lequel les deux parties d'extrémité de la première partie de revêtement interne (46), s'allongeant le long d'un contour dans une section transversale le long de la direction de l'axe de rotation du pneumatique sont respectivement des formes effilées ayant des épaisseurs qui sont progressivement réduites vers un côté interne, dans la direction radiale du pneumatique, et les deux parties d'extrémité de la deuxième partie de revêtement interne (48), s'allongeant le long d'un contour dans une section transversale le long de la direction de l'axe de rotation du pneumatique, sont respectivement des formes effilées ayant des épaisseurs qui sont progressivement réduites vers le côté interne, dans la direction radiale du pneumatique.

6. Pneumatique à roulage à plat (10) selon l'une quelconque des revendications 1 à 5, dans lequel une partie de côté externe (62A) qui correspond à la première partie de revêtement interne (46), et une partie de côté interne (62B) qui correspond à la deuxième partie de revêtement interne (48) sont formées d'un seul tenant.
